# EUROPÄISCHE PATENTSCHRIFT

(11) **EP 2 522 209 B1**
(45) Veröffentlichungstag und Bekanntmachung des Hinweises auf die Patenterteilung: **19.03.2014**
(21) Anmeldenummer: 12167512.8
(22) Anmeldetag: 10.05.2012
(51) Int. Cl.: A01D 34/73

(54) **Anordnung für ein Mähwerk einer Mäh- oder Häckselmaschine sowie Mähwerk**
Assembly for a mower on a mowing or straw cutting machine and mower
Agencement pour un mécanisme de tonte d'un hache-paille ou d'une faucheuse ainsi que le mécanisme de tonte

(30) Priorität: 10.05.2011 DE 202011050089 U
(43) Veröffentlichungstag der Anmeldung: 14.11.2012
(73) Patentinhaber: Kverneland ASA, 4355 Kvernaland (NO)
(72) Erfinder: Nielsen, Rasmus Elmelund, 5892 Gudbjerg (DK)
(74) Vertreter: Bittner, Thomas L.

(56) Entgegenhaltungen:
- EP-B1- 0 486 459
- EP-B1- 1 588 599
- WO-A1-2010/142009
- ES-U- 1 071 477

## Beschreibung

Die Erfindung betrifft eine Anordnung für ein Mähwerk einer Mäh- oder Häckselmaschine sowie ein Mähwerk.

### Hintergrund der Erfindung

Mäh- oder Häckselmaschinen werden im landwirtschaftlichen oder gartenbaulichen Betrieb genutzt, um bodengewachsene Pflanzen zu mähen und / oder zu häckseln. Zu derartigen Pflanzen gehört insbesondere Gras. Zum Mähen oder Häckseln sind die Maschinen mit einem Mähwerk ausgestattet, welches die zum Mähen / Häckseln der Pflanzen notwendigen Bauteile vereinigt. Im Mähwerk sind die zum Schneiden der Pflanzen genutzten Schneidwerkzeuge an einem Werkzeugträger angeordnet, der im Betrieb üblicherweise in eine Rotationsbewegung versetzt wird. Ein solcher Werkzeugträger ist aus dem Dokument EP 0 486 459 B1 bekannt. Der dort beschriebene Werkzeugträger sieht vor, die Schneidwerkzeuge zu montieren, indem ein an dem Schneidwerkzeug aufgenommener Montagebolzen in ein am Werkzeugträger gebildetes Langloch eingeführt wird. Zur Befestigung wird der Bolzen dann relativ zur Rotationsachse des Werkzeugträgers aus einer zur Rotationsachse proximalen Stellung radial nach außen in eine zur Rotationsachse distale Stellung verschoben, derart, dass im distalen Endbereich des Langloches gebildete Verengungsabschnitte in eine zugeordnete Einschnürung am Montagebolzen eingreifen, sodass das Schneidwerkzeug an dem Werkzeugträger gesichert ist.

Ein weiteres Mähwerk offenbart das Dokument EP 1 588 599 B1. Dort ist der an dem Schneidwerkzeug aufgenommene Montagebolzen auf der Oberseite des Werkzeugträgers mit Hilfe eines ein Langloch aufweisenden Sicherungsbauteils befestigt, welches einseitig verengt ist. Im Betrieb kann das Schneidwerkzeug um eine mit Hilfe des Montagebolzens gebildete Rotationsachse schwenken, insbesondere dann, wenn das Schneidwerkzeug auf ein Hindernis trifft. Radial innenseitig zum Montagebolzen ist ein Anschlag gebildet, der diese Schwenkbewegung um den Montagebolzen des Schneidwerkzeuges begrenzt.

### Zusammenfassung der Erfindung

Aufgabe der Erfindung ist es, eine Anordnung für ein Mähwerk einer Mäh- oder Häckselmaschine sowie ein Mähwerk anzugeben, bei denen die Betriebssicherheit verbessert ist, insbesondere hinsichtlich eines unbeabsichtigten Lösens eines Schneidwerkzeuges vom Werkzeugträger im Betrieb.

Diese Aufgabe wird erfindungsgemäß durch eine Anordnung für ein Mäh- oder Häckselmaschine nach dem unabhängigen Anspruch 1 gelöst. Weiterhin ist ein Mähwerk für eine Mäh- oder Häckselmaschine nach dem unabhängigen Anspruch 11 vorgesehen. Vorteilhafte Ausgestaltungen der Erfindung sind Gegenstand von abhängigen Unteransprüchen.

Die Erfindung umfasst den Gedanken einer Anordnung für eine Mäh- oder Häckselmaschine mit einem Werkzeugträger, welcher mit einer Trägerscheibe gebildet und konfiguriert ist, um eine Rotationsachse drehbar an einem Mähwerk einer Mäh- oder Häckselmaschine montiert zu werden, und Schneidwerkzeugen, die jeweils einem zur Rotationsachse radial außen liegendem Schneidmesser und einem zur Rotationsachse radial innen liegendem Halteabschnitt gebildet und in einem zugeordneten Trägerabschnitt lösbar an der Trägerscheibe montiert sind, wobei in den zugeordneten Trägerabschnitten ein zur Rotationsachse radial verlaufendes Langloch gebildet ist, in das in einem zur Rotationsachse proximalen Endbereich ein zum Montieren des Schneidwerkzeuges an dem Werkzeugträger genutzter Montagebolzen einführbar ist, und das Langloch zumindest in einem zur Rotationsachse distalen Endbereich Eingriffabschnitte aufweist, die entlang eines Langlochrandes gebildet sind und in eine Einschnürung an dem Montagebolzen eingreifen, wenn der im Halteabschnitt des Schneidwerkzeuges aufgenommene Montagebolzen beim Montieren der Schneidwerkzeuges aus dem proximalen Endbereich des Langloches in den Bereich des Langloches mit den Eingriffabschnitten verlagert ist. In den zugeordneten Trägerabschnitten sind einander gegenüberliegende und sich in Längsrichtung des Langloches erstreckende Vorsprünge gebildet, die eine Rotation des Schneidwerkzeuges um den Montagebolzen begrenzen oder im Wesentlichen vollständig unterbinden, wenigstens dann, wenn der im Halteabschnitt des Schneidwerkzeuges aufgenommene Montagebolzen in einer radial inneren Langlochhälfte angeordnet ist.

Die sich in Längsrichtung des Langloches erstreckenden Vorsprünge sichern das Schneidwerkzeug gegen ein unbeabsichtigtes Herausschleudern, also ein Lösen von dem Werkzeugträger, insbesondere dann, wenn im Betrieb das Schneidwerkzeug auf ein Hindernis trifft, welches eine radial nach innen gerichtete Verschiebung des Schneidwerkzeuges längs des Langloches verursacht. Diese im Betrieb unbeabsichtigte Verlagerung des Schneidwerkzeuges radial nach innen, also auf die Rotationsachse des Werkzeugträgers hin, führt dazu, dass der Halteabschnitt des Schneidwerkzeuges in dem Bereich der Vorsprünge verlagert wird oder sich weiter in deren Bereich hinein bewegt, wodurch die seitlichen Vorsprünge ihre Führungs- und / oder Anschlagsfunktion erweitern oder überhaupt erst ausbilden können. Das Schneidwerkzeug wird auf diese Weise zusätzlich gegen ein unbeabsichtigtes Herausschleudern gesichert, insbesondere beim harten Auftreffen des Schneidwerkzeuges auf ein Hindernis im Betrieb.

Darüber hinaus übernehmen die Vorsprünge bei der Montage und der Demontage des Schneidwerkzeuges eine Führungsfunktion, indem zumindest der Halteabschnitt des Schneidwerkzeuges beim Verschieben des Montagebolzens in dem Langloch während der Montage / Demontage hierzwischen geführt wird.

Die Vorsprünge sind vorzugsweise in einem Bereich gebildet, der sich radial innen liegend an den zur Rotationsachse proximalen Langlochabschnitt anschließt. Aber auch ein teilweises oder vollständiges Überlappen mit wenigstens einem Teil des Langloches kann vorgesehen sein.

Bevorzugt ist das Schneidwerkzeug in dem zugeordneten Werkzeugträgerabschnitt ohne Zwangsmittel aufgenommen und gesichert, also insbesondere ohne eine Schraubverbindung. Ist das Schneidwerkzeug an dem Werkzeugträger beispielsweise zwischen einer montierten Stellung, in welcher das Schneidwerkzeug an dem Werkzeugträger gesichert ist, und einer Demontagestellung, in welcher das Schneidwerkzeug von dem Werkzeugträger abgenommen werden kann, lediglich mittels einer radialen Verschiebung verlagerbar, ohne das es dem Lösen einer speziellen Befestigung bedarf, kann diese Befestigungsart auch als Schnellverschluss bezeichnet werden.

Eine bevorzugte Weiterbildung der Erfindung sieht vor, dass das Langloch auf einer Werkzeugträgerunterseite gebildet ist, zum Beispiel einem Flachstahlbauteil. In einer Ausgestaltung kann vorgesehen sein, dass das Langloch mit Hilfe eines auf der Unterseite der Trägerscheibe aufgebrachten Funktionsbauteils gebildet ist. Ein überstehender Bolzenkopf des Montagebolzens kann dann in einem Raum zwischen Trägerscheibe und Funktionselement geführt werden. Bei dieser oder anderen Ausgestaltungen kann vorgesehen sein, dass das Langloch im Bereich eines zur Rotationsachse proximalen Endes offen ist. Durch das offene Ende ist dann beispielsweise der Montagebolzen in das Langloch einführbar. Die Eingriffabschnitte des Langloches können sich dann bedarfsweise über die gesamte Länge des Langloches erstrecken. Vorzugsweise sind auch die Vorsprünge auf der Werkzeugunterseite angeordnet.

Bei einer zweckmäßigen Ausgestaltung der Erfindung kann vorgesehen sein, dass auf einer Werkzeugträgeroberseite ein weiteres Langloch gebildet ist, welches wenigstens abschnittsweise mit dem Langloch überlappt und ein Bolzenende des Montagebolzens fiihrend aufnimmt, insbesondere seitlich führend. Das Langloch kann in der Trägerscheibe gebildet sein. Das Bolzenende des Montagebolzens kann vollständig oder teilweise in dem Langloch aufgenommen sein. Vorzugsweise erfolgt die Führung des Bolzenendes in dem weiteren Langloch entlang eines äußeren Umfangs des Bolzens. In einer Ausgestaltung weist das weitere Langloch eine im Wesentlichen gleichbleibende Lochbreite über seine Länge auf.

Eine vorteilhafte Ausführungsform der Erfindung sieht vor, dass zur Rotationsachse distale Enden der Vorsprünge mit zugeordneten, zur Rotationsachse proximalen Eckbereichen im Haltabschnitt des Schneidwerkzeuges für das Schneidwerkzeug einen das Schneidwerkzeug im Mäh- oder Häckselbetrieb in einer Nutzungsstellung sichernden Rotationshemm-Mechanismus hinsichtlich der Rotation des Schneidwerkzeuges um den Montagebolzen bilden, welcher beim Überschreiten einer im Mäh- oder Häckselbetrieb auf das Schneidwerkzeug einwirkenden Schwellwertkraft eine Rotation des Schneidwerkzeuges aus der Nutzungsstellung heraus freigibt. Im normalen Betrieb sichert der Rotationshemm-Mechanismus das Schneidwerkzeug gegen eine Rotation aus der Nutzungsstellung, indem ein- oder beidseitig der proximale Eckbereich am Halteabschnitt des Schneidwerkzeuges und das distale Ende der Vorsprünge sich aufeinander abstützen, wobei eine begrenzte Schwenkbewegung bedarfsweise vorgesehen sein kann. Trifft das Schneidwerkzeug nun auf ein Hindernis im Mäh- oder Häckselbetrieb, so wirkt auf das Schneidwerkzeug eine Kraft, die größer ist als der Widerstand beim Schneiden der Pflanzen, sodass der Rotationshemm-Mechanismus überwunden wird, wodurch eine Rotation des Schneidwerkzeuges aus der Nutzungsstellung heraus freigegeben wird. Hierdurch wird eine Beschädigung des Schneidwerkzeugs beim leichten Auftreffen auf Hindernisse verhindert. Das Schneidwerkzeug kann unter Überwindung des Rotationshemm-Mechanismus solchen leichten Hindernissen ausweichen. Kommt es beim Betrieb zu einem härteren Auftreffen auf ein Hindernis, wird häufig zusätzlich eine Verlagerung des Schneidwerkzeugs radial nach innen zur Rotationsachse hin ausgelöst. Für diesen Fall wirken dann die sich in Längsrichtung des Langloches erstreckenden Vorsprünge als Sicherung für das Schneidwerkzeug.

Bevorzugt sieht eine Fortbildung der Erfindung vor, dass die Vorsprünge mittels eines auf der Werkzeugträgerunterseite angeordneten U-förmigen Aufsatzelementes gebildet sind. Beispielsweise kann das Aufsatzelement mittels eines U-Rohrabschnitts hergestellt sein. Das Aufsatzelement ist vorzugsweise auf der Unterseite der Trägerscheibe montiert, bevorzugt mittels Schweißen.

Bei einer vorteilhaften Ausgestaltung der Erfindung kann vorgesehen sein, dass die Vorsprünge in einem zur Rotationsachse proximalen Endbereich zur Rotationsachse hin schräg abfallend gebildet sind. Alternativ oder ergänzend können die Vorsprünge radial nach außen schräg abfallend gebildet sein.

Eine Weiterbildung der Erfindung kann vorsehen, dass an der Werkzeugträgerscheibe umlaufend und im Wesentlichen gleich beabstandet wenigstens drei Trägerabschnitte gebildet sind. Beispielsweise können drei Werkzeugträgerabschnitte mit einem jeweiligen Schneidwerkzeug vorgesehen sein, die umlaufend in einem Abstand von etwa 120° angeordnet sind.

Eine bevorzugte Weiterbildung der Erfindung sieht vor, dass die Schneidwerkzeuge an dem Werkzeugträger montagewerkzeugfrei montierbar und demontierbar sind. Eine solche montagewerkzeugfreie Handhabung zum Montieren und Demontieren des Schneidwerkzeuges ist beispielsweise dann gegeben, wenn das Schneidwerkzeug mit dem hieran aufgenommenen Montagebolzen lediglich radial nach Außen von der Rotationsachse weg (Montage) und radial nach Innen zur Rotationsachse hin (Demontage) verlagert werden muss, um das Schneidwerkzeug an dem Werkzeugträger anzubringen oder es hiervon zu lösen. Die in die Einschnürung des Montagebolzens eingreifenden Eingriffabschnitte sichern das Schneidwerkzeug in der zur Rotationsachse radial außen liegenden Stellung gegen ein unbeabsichtigtes Lösen.

Bei einer zweckmäßigen Ausgestaltung der Erfindung kann vorgesehen sein, dass die Schneidwerkzeuge an dem Werkzeugträger sich im Mäh- oder Häckselbetrieb selbst ausrichtend gelagert sind. Aufgrund einer Drehbarkeit des Schneidwerkzeuges um den Montagebolzen richtet sich das Schneidwerkzeug beim Rotieren der Trägerscheibe um die Rotationsachse im Wesentlichen in Längsrichtung des Langloches aus. Im Übrigen wird die Ausrichtung des Schneidwerkzeuges vorzugsweise aufgrund des Zusammenwirkens mit den Vorsprüngen unterstützt.

Eine vorteilhafte Ausführungsform der Erfindung sieht vor, dass die Schneidwerkzeuge an dem Werkzeugträger sich im Mäh- oder Häckselbetrieb in der Nutzungsstellung selbst sichernd gelagert sind. Eine Selbstsicherung ist insbesondere dadurch gegeben, dass der Montagebolzen zusammen mit dem Schneidwerkzeug im Betrieb aufgrund der Rotation der Trägerscheibe stets radial nach Außen gedrückt wird.

### Beschreibung bevorzugter Ausführungsbeispiele der Erfindung

Die Erfindung wird im Folgenden anhand von bevorzugten Ausführungsbeispielen unter Bezugnahme auf Figuren einer Zeichnung näher erläutert. Hierbei zeigen:
- Fig. 1: eine schematische Darstellung einer Anordnung für eine Mäh- oder Häckselmaschine von schräg oben,
- Fig. 2: eine schematische Darstellung der Anordnung aus Fig. 1 von schräg unten,
- Fig. 3: eine schematische Darstellung der Anordnung aus Fig. 1 von schräg unten, wobei eines der Schneidwerkzeuge und ein zugeordneter Montagebolzen gelöst von einer Trägerscheibe dargestellt sind,
- Fig. 4: eine schematische Darstellung der Anordnung aus Fig. 1 von schräg unten, wobei im Unterschied zu Fig. 3 der Montagebolzen nun in einer zugeordneten Bohrung im Halteabschnitt des Schneidwerkzeuges angeordnet ist,
- Fig. 5: eine schematische Darstellung der Anordnung aus Fig. 1 von schräg unten, wobei im Unterschied zu Fig. 4 das neu montierte Schneidwerkzeug und der Montagebolzen (vgl. Schneidwerkzeug links oben) im zugeordneten Werkzeugträgerabschnitt angeordnet sind,
- Fig. 6: eine schematische Darstellung der Anordnung nach Fig. 1 von schräg unten, wobei im Unterschied zu Fig. 5 das neu montierte Schneidwerkzeug in die Nutzungsstellung verlagert ist, und
- Fig. 7: eine schematische Darstellung der Anordnung nach Fig. 1 von schräg unten, wobei das neu montierte Schneidwerkzeug aus der Nutzungsstellung heraus gedreht ist.

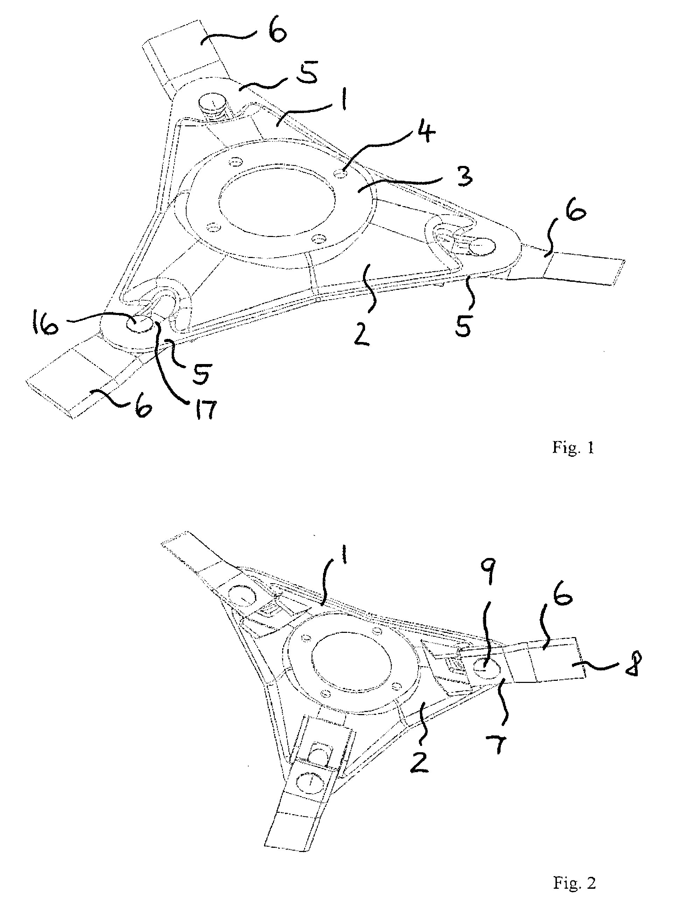

Fig. 1 zeigt eine schematische Darstellung einer Anordnung für eine Mäh- oder Häckselmaschine mit einem Werkzeugträger 1, der mit einer Trägerscheibe 2 gebildet ist. Die Trägerscheibe 2 verfügt über einen eine Rotationsachse definierenden Montageabschnitt 3 mit Bohrungen 4, die zur Aufnahme von Schrauben oder Bolzen bei der Montage des Werkzeugträgers 1 in einem Mähwerk dienen.

An der Trägerscheibe 2 sind umlaufend im Abstand von etwa 120° drei Trägerabschnitte 5 gebildet, in denen jeweils ein Schneidwerkzeug 6 montiert ist.

Fig. 2 zeigt eine schematische Darstellung der Anordnung aus Fig. 1 von schräg unten. Die Schneidwerkzeuge 6 verfügen jeweils über einen Halteabschnitt 7, an dem zur Rotationsachse radial außen liegend ein Schneidmesser 8 gebildet ist. Montiert sind die Schneidwerkzeuge 6 im zugeordneten Trägerabschnitt 5 mit Hilfe eines Montagebolzens 9, der eine lokale Drehachse für das Schneidwerkzeug 6 bildet. Im Mäh- oder Häckselbetrieb richten sich die Schneidwerkzeuge selbsttätig in der in Fig. 2 dargestellten Art und Weise aus.

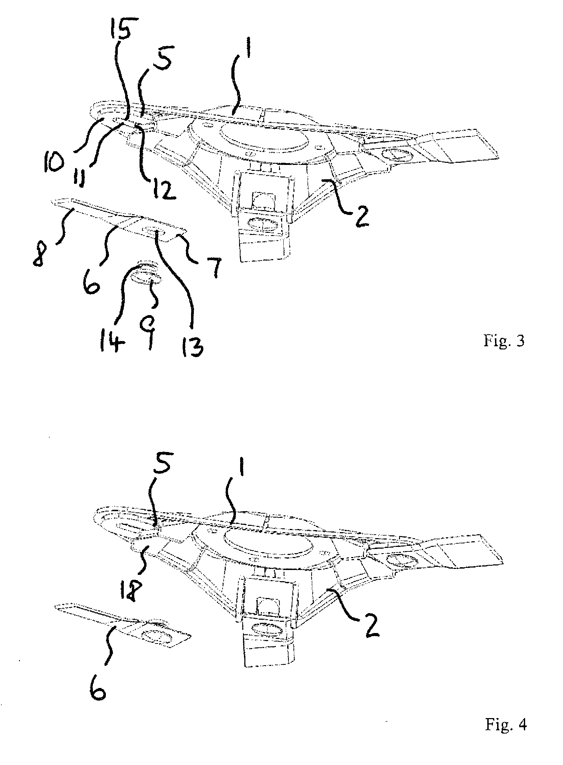

Fig. 3 zeigt die Anordnung aus Fig. 1 schräg von unten, wobei ein Schneidwerkzeug 6 und ein Montagebolzen 9 gelöst von der Trägerscheibe 2 dargestellt sind. Aus Fig. 3 ergibt sich, dass im Trägerabschnitt 5, in welchem die Schneidwerkzeuge 6 montiert sind, auf der Unterseite der Trägerscheibe 2 ein Flachbauteil 10 mit einem Langloch 11 angeordnet ist, welches an seinem zur Rotationsachse der Trägerscheibe 2 proximalen Ende 12 offen ist.

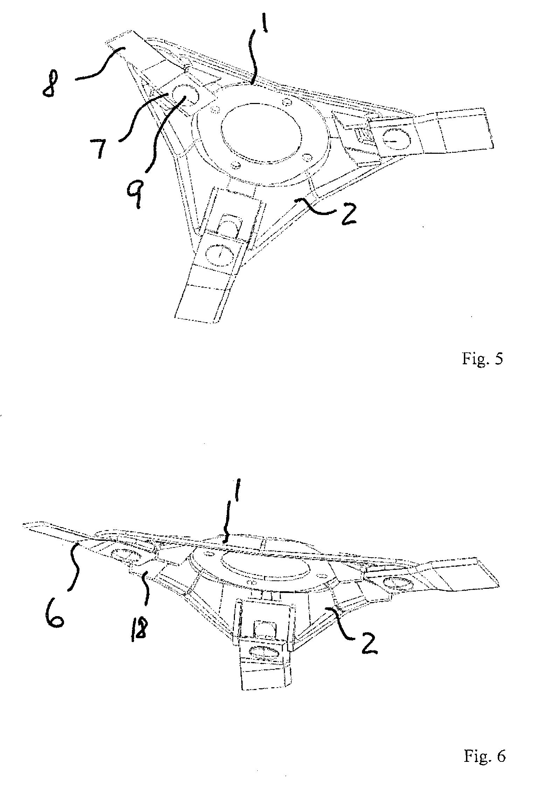

Aus den Fig. 4 und 5 ergibt sich, dass bei der Montage des Schneidwerkzeuges 6 mit Hilfe des Montagebolzens 9 ein in eine Bohrung 13 im Schneidwerkzeug 6 eingeführter Abschnitt des Montagebolzens 9, der mit einer Einschnürung 14 versehen ist, über das offene proximale Ende 12 in das Langloch 11 eingeschoben wird, sodass in die Einschnürung 14 seitliche Eingriffabschnitte 15 des Langlochs 11 eingreifen. Fig. 5 zeigt hierbei eine Stellung des Schneidwerkzeuges 6, in welcher der Montagebolzen 9 gerade noch im oder vor dem offenen proximalen Ende 12 des Langloches 11 angeordnet ist.

Fig. 6 zeigt dann das neu montierte Schneidwerkzeug 6 in der Nutzungsstellung. Ausgehend von Fig. 5 wurde das Schneidwerkzeug 6 also bezüglich der Rotationsachse der Trägerscheibe 2 längs des Langloches 11 radial nach außen bewegt, wobei der Montagebolzen 9 hierbei entlang des Langloches 11 geführt wird. Aus Fig. 1 ergibt sich in diesem Zusammenhang, dass ein hinsichtlich der Einschnürung 14 dickeres Bolzenende 16 des Montagebolzens 9 hierbei in einem weiteren Langloch 17 auf der Oberseite der Trägerscheibe 2 geführt wird.

Wie sich insbesondere aus den Fig. 3 bis 5 ergibt, sind parallele zu Seitenkanten des Langloches 11 Vorsprünge 18 gebildet, die das Schneidwerkzeug sichern gegen unbeabsichtigtes Herausschleudern im Betrieb. Weiterhin wird der Halteabschnitt 7 des Schneidwerkzeuges 6 beim Montieren / Demontieren zwischen den Vorsprüngen 18 geführt.

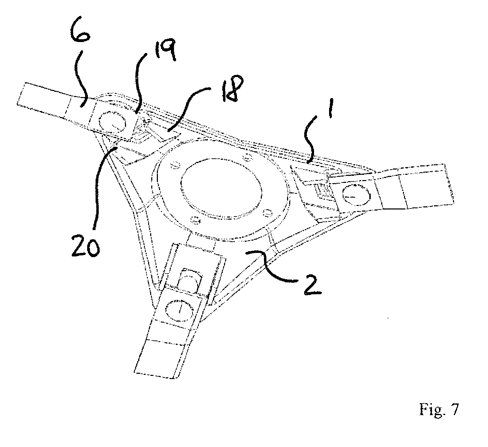

Fig. 7 zeigt eine weitere schematische Darstellung der Anordnung nach Fig. 1 von schräg unten, wobei das neu montierte Schneidwerkzeug 6 aus der radial nach außen gerichteten Nutzungsstellung (vgl. Schneidwerkzeug links oben in Fig. 5 und 6) beim Mähen oder Häckseln herausgedreht wurde, was insbesondere aufgrund des Auftreffens des Schneidwerkzeuges 6 auf ein Hindernis verursacht werden kann. Hierzu war eine Rückhaltekraft zu überwinden, die aus dem Zusammenwirken zur Rotationsachse der Trägerscheibe 2 distaler Ecken 19 der Vorsprünge 18 und zur Rotationsachse proximaler Eckabschnitte 20 des Halteabschnitts 7 sich ergibt. Alternativ kann vorgesehen sein, dass es an einem solchen Rückhalte- oder Hemmmechanismus fehlt, was insbesondere dadurch erreichbar ist, dass die distalen Ecken 19 der Vorsprünge 18 und die proximalen Ecken 20 des Halteabschnittes 7 der Schneidwerkzeuge 6 beabstandet sind, wenn sich das Schneidwerkzeug 6 in der zur Rotationsachse radial außen liegenden Nutzungsstellung befindet.

## Patentansprüche

1. Anordnung für ein Mähwerk einer Mäh- oder Häckselmaschine, mit
- einem Werkzeugträger (1), welcher mit einer Trägerscheibe (2) gebildet und konfiguriert ist, um eine Rotationsachse drehbar an einem Mähwerk einer Mäh- oder Häckselmaschine montiert zu werden, und
- Schneidwerkzeugen (6), die jeweils einem zur Rotationsachse radial außen liegendem Schneidmesser (8) und einem zur Rotationsachse radial innen liegendem Halteabschnitt (7) gebildet und in einem zugeordneten Trägerabschnitt (5) lösbar an der Trägerscheibe (2) montiert sind,
wobei
- in den zugeordneten Trägerabschnitten (5) ein zur Rotationsachse radial verlaufendes Langloch (11) gebildet ist, in das in einem zur Rotationsachse proximalen Endbereich ein zum Montieren des Schneidwerkzeuges (6) an dem Werkzeugträger (1) genutzter Montagebolzen (9) einführbar ist, und
- das Langloch (11) zumindest in einem zur Rotationsachse distalen Endbereich Eingriffabschnitte (15) aufweist, die entlang eines Langlochrandes gebildet sind und in eine Einschnürung (14) an dem Montagebolzen (9) eingreifen, wenn der im Halteabschnitt (7) des Schneidwerkzeuges (6) aufgenommene Montagebolzen (9) beim Montieren der Schneidwerkzeuges (6) aus dem proximalen Endbereich des Langloches (11) in den Bereich des Langloches (11) mit den Eingriffabschnitten (15) verlagert ist,
**dadurch gekennzeichnet, dass** in den zugeordneten Trägerabschnitten (5) einander gegenüberliegende und sich in Längsrichtung des Langloches (11) erstreckende Vorsprünge (18) gebildet sind, die eine Rotation des Schneidwerkzeuges (6) um den Montagebolzen (9) begrenzen oder im Wesentlichen vollständig unterbinden, wenigstens dann, wenn der im Halteabschnitt (7) des Schneidwerkzeuges (6) aufgenommene Montagebolzen (9) in einer radial inneren Langlochhälfte angeordnet ist.

2. Anordnung nach Anspruch 1, **dadurch gekennzeichnet, dass** das Langloch (11) auf einer Werkzeugträgerunterseite gebildet ist.

3. Anordnung nach Anspruch 1 oder 2, **dadurch gekennzeichnet, dass** auf einer Werkzeugträgeroberseite ein weiteres Langloch (17) gebildet ist, welches wenigstens abschnittsweise mit dem Langloch (11) überlappt und ein Bolzenende (16) des Montagebolzens (9) führend aufnimmt.

4. Anordnung nach mindestens einem der vorangehenden Ansprüche, **dadurch gekennzeichnet, dass** zur Rotationsachse distale Enden der Vorsprünge (18) mit zugeordneten, zur Rotationsachse proximalen Eckbereichen im Haltabschnitt (7) des Schneidwerkzeuges (6) für das Schneidwerkzeug (6) einen das Schneidwerkzeug (6) im Mäh- oder Häckselbetrieb in einer Nutzungsstellung sichernden Rotationshemm-Mechanismus hinsichtlich der Rotation des Schneidwerkzeuges (6) um den Montagebolzen (9) bilden, welcher beim Überschreiten einer im Mäh- oder Häckselbetrieb auf das Schneidwerkzeug (6) einwirkenden Schwellwertkraft eine Rotation des Schneidwerkzeuges (6) aus der Nutzungsstellung heraus freigibt.

5. Anordnung nach mindestens einem der vorangehenden Ansprüche, **dadurch gekennzeichnet, dass** die Vorsprünge (18) mittels eines auf der Werkzeugträgerunterseite angeordneten U-förmigen Aufsatzelementes gebildet sind.

6. Anordnung nach mindestens einem der vorangehenden Ansprüche, **dadurch gekennzeichnet, dass** die Vorsprünge (18) in einem zur Rotationsachse proximalen Endbereich zur Rotationsachse hin schräg abfallend gebildet sind.

7. Anordnung nach mindestens einem der vorangehenden Ansprüche, **dadurch gekennzeichnet, dass** an der Werkzeugträgerscheibe (2) umlaufend und im Wesentlichen gleich beabstandet wenigstens drei Trägerabschnitte (5) gebildet sind.

8. Anordnung nach mindestens einem der vorangehenden Ansprüche, **dadurch gekennzeichnet, dass** die Schneidwerkzeuge (6) an dem Werkzeugträger (1) montagewerkzeugfrei montierbar und demontierbar sind.

9. Anordnung nach mindestens einem der vorangehenden Ansprüche, **dadurch gekennzeichnet, dass** die Schneidwerkzeuge (6) an dem Werkzeugträger (1) sich im Mäh- oder Häckselbetrieb selbst ausrichtend gelagert sind.

10. Anordnung nach mindestens einem der vorangehenden Ansprüche, **dadurch gekennzeichnet, dass** die Schneidwerkzeuge (6) an dem Werkzeugträger (1) sich im Mäh- oder Häckselbetrieb in der lVutzungsstellung selbst sichernd gelagert sind.

11. Mähwerk für eine Mäh- oder Häckselmaschine, mit einer Antriebseinrichtung, die eine rotierende Antriebsbewegung bereitstellt, und einer an die Antriebseinrichtung koppelnden Anordnung nach mindestens einem der vorangehenden Ansprüche.

## Claims

1. An arrangement for a mower of a mowing- or straw cutting machine, with
- a tool carrier (1), which is formed with a carrier disc (2) and configured in order to be mounted rotatably about a rotation axis on a mower of a mowing- or straw cutting machine, and
- cutting tools (6), which are formed respectively by a cutting edge (8) lying radially externally to the rotation axis and by a holding section (7) lying radially internally to the rotation axis, and are mounted detachably in an associated carrier section (5) on the carrier disc (2),
wherein
- in the associated carrier sections (5) an elongated hole (11) is formed running radially to the rotation axis, into which hole in an end region proximal to the rotation axis a mounting bolt (9) is able to be introduced which is used for mounting the cutting tool (6) on the tool carrier (1), and
- the elongated hole (11) has, at least in an end region distal to the rotation axis, engagement sections (15) which are formed along an elongated hole edge and engage into a constriction (14) on the mounting bolt (9) when the mounting bolt (9), received in the holding section (7) of the cutting tool (6), is displaced during the mounting of the cutting tool (6) from the proximal end region of the elongated hole (11) into the region of the elongated hole (11) with the engagement sections (15),
**characterized in that** projections (18) are formed in the associated carrier sections (5), lying opposite one another and extending in the longitudinal direction of the elongated hole (11), which projections delimit or substantially completely prevent a rotation of the cutting tool (6) about the mounting bolt (9), at least when the mounting bolt (9), which is received in the holding section (7) of the cutting tool (6), is arranged in a radially inner half of the elongated hole.

2. The arrangement according to Claim 1, **characterized in that** the elongated hole (11) is formed on an underside of the tool carrier.

3. The arrangement according to Claim 1 or 2, **characterized in that** on an upper side of the tool carrier a further elongated hole (17) is formed, which overlaps at least in sections with the elongated hole (11) and receives a bolt end (16) of the mounting bolt (9) in a guiding manner.

4. The arrangement according to at least one of the preceding claims, **characterized in that** ends of the projections (18) distal to the rotation axis form with associated corner regions proximal to the rotation axis in the holding section (7) of the cutting tool (6) a rotation-inhibiting mechanism for the cutting tool (6), securing the cutting tool (6) in mowing- or straw cutting operation in a position of use with regard to the rotation of the cutting tool (6) about the mounting bolt (9), which on exceeding a threshold force acting on the cutting tool (6) in mowing- or straw cutting operation, releases a rotation of the cutting tool (6) from the usage position.

5. The arrangement according to at least one of the preceding claims, **characterized in that** the projections (18) are formed by means of a U-shaped attachment element arranged on the underside of the tool carrier.

6. The arrangement according to at least one of the preceding claims, **characterized in that** the projections (18) are formed in an end region proximal to the rotation axis, sloping obliquely towards the rotation axis.

7. The arrangement according to at least one of the preceding claims, **characterized in that** at least three carrier sections (5) are formed circumferentially on the tool carrier disc (2) and spaced apart substantially equally.

8. The arrangement according to at least one of the preceding claims, **characterized in that** the cutting tools (6) are able to be mounted on and dismantled from the tool carrier (1) in a manner free of mounting tools.

9. The arrangement according to at least one of the preceding claims, **characterized in that** the cutting tools (6) are mounted on the tool carrier (1) in a self-aligning manner in the mowing- or straw cutting operation.

10. The arrangement according to at least one of the preceding claims, **characterized in that** the cutting tools (6) are mounted on the tool carrier (1) in a self-securing manner in the usage position in the mowing- or straw cutting operation.

11. A mower for a mowing- or straw cutting machine, with a drive device which provides a rotating drive movement, and with an arrangement coupling to the drive device according to at least one of the preceding claims.

## Revendications

1. Dispositif pour une faucheuse d'une machine de fauchage ou de broyage, comportant :
- un support d'outil (1), qui est formé et configuré avec un disque porteur (2), afin d'être monté rotativement autour d'un axe de rotation sur une faucheuse d'une machine de fauchage ou de broyage, et
- des outils de découpe (6), qui sont formés respectivement d'une lame de découpe (8) située radialement à l'extérieur par rapport à l'axe de rotation et d'une portion de retenue (7) située radialement à l'intérieur par rapport à l'axe de rotation et sont montés de manière amovible sur le disque porteur (2) dans une portion porteuse (5) coordonnée,
dans lequel
- dans les portions porteuses coordonnées (5), un alésage oblong (11) s'étendant radialement par rapport à l'axe de rotation est formé, dans lequel dans une zone d'extrémité proximale par rapport à l'axe de rotation, un boulon de montage (9) utilisé pour monter l'outil de découpe (6) sur le support d'outil (1) peut être inséré, et
- l'alésage oblong (11) présente dans au moins une zone d'extrémité distale par rapport à l'axe de rotation des portions de mise en prise (15), qui sont formées le long d'un bord d'alésage oblong et viennent en prise dans un étranglement (14) avec le boulon de montage (9), quand le boulon de montage (9) renfermé dans la portion de retenue (7) de l'outil de découpe (6) est déplacé lors du montage de l'outil de découpe (6) hors de la zone d'extrémité proximale de l'alésage oblong (11) à l'intérieur de la zone de l'alésage oblong (11) avec les portions de mise en prise (15),
**caractérisé en ce que** dans les portions porteuses coordonnées (5), des protubérances (18) en vis-à-vis les unes des autres et s'étendant dans la direction longitudinale de l'alésage oblong (11) sont formées, qui limitent ou empêchent essentiellement totalement une rotation de l'outil de coupe (6) autour du boulon de montage (9), au moins quand le boulon de montage (9) renfermé dans la portion de retenue (7) de l'outil de découpe (6) est disposé dans une moitié radiale intérieure d'alésage oblong.

2. Dispositif selon la revendication 1, **caractérisé en ce que** l'alésage oblong (11) est formé sur un côté inférieur du support d'outil.

3. Dispositif selon les revendications 1 ou 2, **caractérisé en ce que** sur un côté supérieur du support d'outil, un alésage oblong supplémentaire (17) est formé, qui se superpose au moins sur des portions à l'alésage oblong (11) et renferme avec guidage une extrémité de boulon (16) du boulon de montage (9).

4. Dispositif selon au moins une des revendications précédentes, **caractérisé en ce que** les extrémités distales par rapport à l'axe de rotation des protubérances (18) forment avec les portions de coin proximales par rapport à l'axe de rotation coordonnées dans la portion de retenue (7) de l'outil de découpe (6) pour l'outil de découpe (6) un mécanisme empêchant la rotation fixant l'outil de découpe (6) en fonctionnement de fauchage ou de hachage dans une position d'utilisation en ce qui concerne la rotation de l'outil de découpe (6) autour du boulon de montage (9), qui lors du dépassement d'une valeur de force seuil agissant sur l'outil de découpe (6) lors du fonctionnement de fauchage ou de broyage débloque une rotation de l'outil de découpe (6) à partir de la position d'utilisation.

5. Dispositif selon au moins une des revendications précédentes, **caractérisé en ce que** les protubérances (18) sont formées au moyen d'un élément rapporté en forme de U disposé sur le côté inférieur du support d'outil.

6. Dispositif selon au moins une des revendications précédentes, **caractérisé en ce que** les protubérances (18) sont formées dans une zone d'extrémité proximale par rapport à l'axe de rotation allant en diminuant en oblique.

7. Dispositif selon au moins une des revendications précédentes, **caractérisé en ce que** au moins trois portions porteuses (5) faisant le tour de la circonférence du disque porteur d'outil (2) et essentiellement espacées identiquement sont formées.

8. Dispositif selon au moins une des revendications précédentes, **caractérisé en ce que** les outils de découpe (6) sur le support d'outil (1) peuvent être montés et démontés sans outils de montage.

9. Dispositif selon au moins une des revendications précédentes, **caractérisé en ce que** les outils de découpe (6) sur le support d'outil (1) sont positionnés en auto-alignement lors du fonctionnement de fauchage ou de broyage.

10. Dispositif selon au moins une des revendications précédentes, **caractérisé en ce que** les outils de découpe (6) sur le support d'outil (1) sont positionnés en auto-fixation lors du fonctionnement de fauchage ou de broyage.

11. Faucheuse pour une machine de fauchage ou de broyage, comportant un dispositif d'entraînement, qui fournit un mouvement d'entrainement rotatif, et un dispositif couplant au dispositif d'entraînement selon au moins une des revendications précédentes.
